# EUROPEAN PATENT APPLICATION

(11) **EP 4 666 922 A1**
(43) Date of publication of application: **24.12.2025**
(21) Application number: 25183239.0
(22) Date of filing: 17.06.2025
(51) Int. Cl.: A47K 13/26, B25B 13/04, F16B 31/02, A47K 13/12

(54) **FASTENING ASSEMBLY**

(30) Priority: 18.06.2024 US 202463661399 P
(71) Applicant: Bemis Manufacturing Company, Sheboygan Falls, WI 53085 (US)
(72) Inventor: FISCHER, Keith, Sheboygan Falls, WI 53085 (US)
(74) Representative: Appleyard Lees IP LLP

(57) **Abstract**

A fastening assembly (300) may include a fastener (304) having a threaded portion (336) defined around a longitudinal axis (338), a drive portion (324), and a bypass portion (344). A fastening assembly (300) may include a lever arm (332) that is moveable along the longitudinal axis (338) between a first state, in which the lever arm (332) is interfaced with the drive portion 324), and a second state, in which the lever arm (332) is interfaced with the bypass portion (344), wherein the lever arm (332) is operable to rotate the fastener (304) in the first state and operable to rotate relative to the fastener (304) in the second state.

## Description

### CROSS-REFERENCE TO RELATED APPLICATIONS

This application claims priority to U.S. Provisional Application No. 63/661,399, filed June 18, 2024, the entire contents of which are incorporated by reference herein.

### FIELD OF THE DISCLOSURE

The present disclosure relates to fastening assemblies for coupling two objects or items together. For example, the present disclosure relates to a fastening assembly that couples a toilet seat hinge to a toilet bowl, a toilet mounting to a floor, a faucet to a sink, and the like. The fastening assembly may also be used in any other application where the desired outcome is to fasten one item to another item.

### SUMMARY

The present disclosure provides, in one aspect, a fastening assembly including: a fastener including a threaded portion defined about a longitudinal axis, a drive portion, and a bypass portion; and a lever arm that is moveable along the longitudinal axis between a first state, in which the lever arm is interfaced with the drive portion, and a second state, in which the lever arm is interfaced with the bypass portion, wherein the lever arm is operable to rotate the fastener in the first state and operable to rotate relative to the fastener in the second state.

The present disclosure provides, in another aspect, a fastening assembly configured to couple a toilet seat hinge to a toilet bowl by a threaded object, the fastening assembly including: a fastener including a first segment having a drive portion and a bypass portion extending from the drive portion, a second segment having a threaded portion defined around a longitudinal axis, and a shear segment disposed between the first segment and the second segment; and a lever arm that is coupled to the first segment and is moveable along the longitudinal axis between a first state, in which the lever arm is interfaced with the drive portion, and a second state, in which the lever arm is interfaced with the bypass portion, wherein the lever arm is operable to rotate the fastener relative to the threaded object in the first state and operable to rotate relative to the fastener in the second state.

Other aspects of the disclosure will become apparent by consideration of the detailed description and accompanying drawings.

### BRIEF DESCRIPTION OF THE DRAWINGS

FIG. 1 illustrates toilet seat hinges coupling a toilet seat to a toilet bowl using a fastening assembly of the present disclosure.
FIG. 2 is a cross-sectional view of the fastening assembly of FIG. 1, including a fastener and a lever arm in a first state.
FIG. 3 is a cross-sectional view of the fastening assembly of FIG. 1, including the fastener and the lever arm in a second state.
FIG. 4 is an exploded view of the fastening assembly of FIG. 1, illustrating the lever arm removed from the fastener.
FIG. 5 is a perspective view of a fastening assembly in accordance with another embodiment of the disclosure.
FIG. 6 is a perspective view of the fastening assembly of FIG. 5, including a fastener and a lever arm in a first state.
FIG. 7 is a perspective view of the fastening assembly of FIG. 5, including the fastener and the lever arm in a second state.
FIG. 8 is an exploded view of the fastening assembly of FIG. 5, illustrating the lever arm removed from the fastener.
FIG. 9 is an exploded view of a fastening assembly in accordance with yet another embodiment of the disclosure, illustrating a fastener adapter and a lever arm.
FIG. 10 is a perspective view of a fastening assembly in accordance with still yet another embodiment of the disclosure, illustrating a castle slotted fastener and a corresponding lever arm.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of supporting other embodiments and being practiced or being carried out in various ways. Also, it is to be understood that the phraseology and terminology used herein is for the purpose of description and should not be regarded as limiting. Terms of degree, such as "substantially," "about," "approximately," etc. are understood by those of ordinary skill to refer to reasonable ranges outside of the given value, for example, general tolerances associated with manufacturing, assembly, and use of the described embodiments.

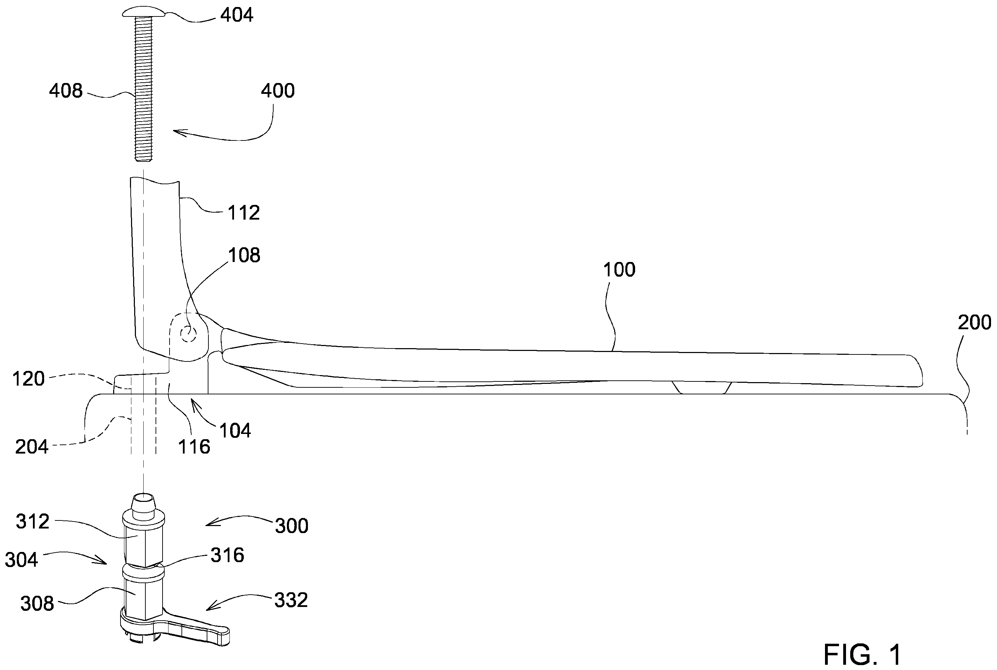

FIG. 1 illustrates a toilet seat 100 coupled to a toilet bowl 200 via a fastening assembly 300 and a bolt 400. The toilet seat 100 includes toilet seat hinges 104 that enable the toilet seat 100 to pivot about a pivot axis 108 between an upright position and a lowered, in-use position relative to the toilet bowl 200. In some embodiments, the toilet seat hinges 104 also support a toilet lid 112 that pivots about the pivot axis 108. The toilet seat hinges 104 align with mounting holes 204 in the toilet bowl 200. In some embodiments, the toilet seat 100 may include two toilet seat hinges 104. In other embodiments, the toilet seat 100 may include one toilet seat hinge 105, such as a platform-style hinge.

With continued reference to FIG. 1, the illustrated toilet seat hinges 104 each include a hinge base 116 having an aperture 120 that align with the mounting holes 204. The apertures 120 and the mounting holes 204 receive the bolt 400. On one end, the bolt 400 includes a head 404 that interfaces with the hinge base 116 and inhibits the bolt 400 from falling through the aperture 120 and the mounting hole 204. On the other end, the bolt 400 includes exterior threads 408 that at least partially extend along the length of the bolt 400. The exterior threads 408 of the bolt 400 are configured to mate with the fastening assembly 300, as explained in further detail below. In some embodiments, the bolt 400 may also receive various washers and/or bushings that aid in the fastening of the toilet seat 100 to the toilet bowl 200.

In the illustrated embodiment, the fastening assembly 300 is operable to secure the hinge base 116-and ultimately the toilet seat 100-to the toilet bowl 200. The process of mounting the toilet seat 100 to a toilet bowl 200 involves tightening a fastener to the bolt 400, which may result in damaging the toilet bowl 200 if the fastener is inadvertently over-torqued or may result in an unsecure connection if the fastener is under-torqued. Thus, a portion of the fastening assembly 300 breaks when the desired torque is reached, as discussed in U.S. Patent No. 9,635,987, thereby limiting the amount of force applied to the toilet bowl 200 and identifying when a correct amount of force is applied.

With reference to FIGS. 1-3, the fastening assembly 300 is threaded onto the exterior threads 408 of the bolt 400 to secure the hinge base 116 to the toilet bowl 200. The illustrated fastening assembly 300 includes a shear nut fastener 304, meaning a portion of the nut breaks when the desired torque is reached. The fastener 304 includes a first segment 308, a second segment 312, a shear segment 316 connecting the segments 308, 312. In other embodiments, the fastening assembly 300 may include another nut fastener that does not break.

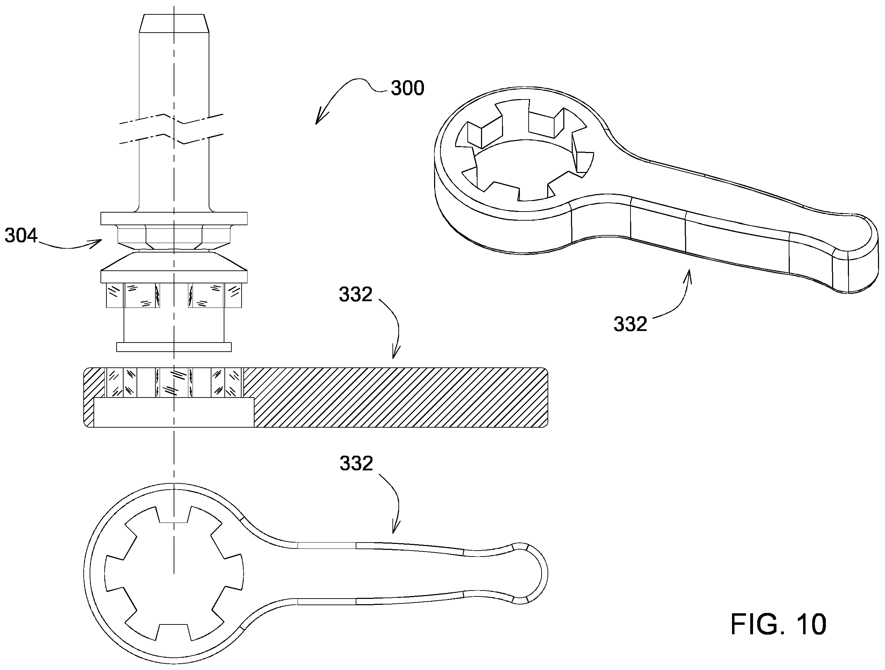

The first segment 308 includes a first drive portion 324, and the second segment 312 includes a second drive portion 328. The first drive portion 324 is driven by a lever arm 332, or tool, when assembling the fastener 304 onto the bolt 400 until the first drive portion 324 breaks away (i.e., separates) from the second segment 312. At this point, another tool may be used to engage the second drive portion 328 when disassembling the fastener 304 from the bolt 400. In the illustrated embodiment, both the first drive portion 324 and the second drive portion 328 are hex-shaped ½" nuts. That is, the first drive portion 324 and the second drive portion 328 have similar outer geometries configured to be engaged by the same type and size of tool. In other embodiments, shown in FIG. 10, the first and second drive portions 324, 328 may alternatively be different sizes or different geometries, such as castellations, splines, teeth, or other various mating geometries. In some embodiments, the first and second drive portions 324, 328 may have different sized and/or geometries to each other.

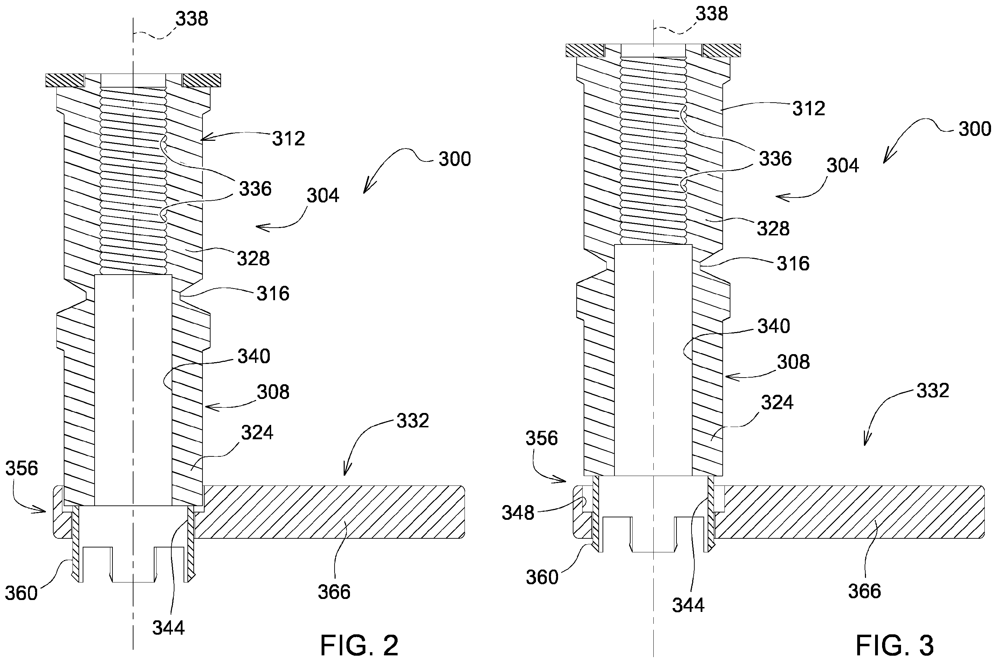

With reference to FIGS. 2 and 3, the second segment 312 includes a threaded portion 336 which is formed or defined helically around a longitudinal axis 338 to allow the fastener 304 to screw onto the corresponding exterior threads 408 of the bolt 400. The first segment 308 includes a clearance hole 340 without threads to allow the first segment 308 to break away from the second segment 312 (and the bolt 400) when the shear segment 316 fractures. The clearance hole 340 is axially aligned along the longitudinal axis 338. To ensure that the shear segment 316 breaks instead of either of the segments 308 or 312, the shear segment 316 has a lower torque resistance than either of the segments 308 or 312. This means that as an increasing torque is applied to the segment 308 and is transmitted to the segments 312 and 316, the shear segment 316 will break before either of the segments 308 or 312. The lower torque resistance can be provided in many ways, such as, for example and as shown in the drawings, by giving the shear segment 316 a lesser cross-sectional area than either of the segments 308, 312.

The fastener 304 may be, for example, an injection molded component composed of plastic, glass fiber reinforced propylene, nylon, metal or other suitable material depending on the application. In some high-strength, high-torque application, for example, the fastener 304 may be composed of metal that still fractures at the shear segment 316. In lower-strength, lower-torque applications, the fastener 304 being composed of a plastic material is sufficient. Still, in other embodiment, the fastener 304 may be composed of more than one material (e.g., bi-metal), where the first and second segments 308, 312 are composed of a high strength metal (e.g., stainless steel) and the shear segment 316 is composed of a lower strength metal (e.g., carbon steel) to further concentrate the fracturing at the shear segment 316.

The fastener 304 further includes a bypass portion 344 that is incorporated with the first segment 308. In some embodiments, the bypass portion 344 is integrally formed (e.g., molded, machined, etc.) as a single piece with a remainder of the fastener 304. In other embodiments, the bypass portion 344 may be formed as a separate piece that is secured to the remainder of the fastener 304. The bypass portion 344 is adjacent the first drive portion 324 and axially aligned along the longitudinal axis 338. Specifically, the bypass portion 344 extends away from the first drive portion 324 in a direction along the longitudinal axis 338. In the illustrated embodiment, the bypass portion 344 is a cylindrical sleeve that interfaces with the lever arm 332 and allows the lever arm 332 to rotate around the fastener 304 without rotating the fastener 304. That is, when the lever arm 332 is only interfaced with the bypass portion 344, the lever arm 332 may rotate relative to the fastener 304. That said, the lever arm 332 may move between a first state, in which the lever arm 332 is interfaced (i.e., engaged) with the first drive portion 324, and a second state, in which the lever arm 332 is interfaced (i.e., engaged) with the bypass portion 344. As a result, the lever arm 332 is configured to rotate the fastener 304 in the first state, whereas the lever arm 332 is configured to rotate relative to the fastener 304 in the second state. Said another way, the lever arm 332 and the fastener 304 co-rotate together in the first state. The lever arm 332 is moveable along the longitudinal axis 338 between the first state and the second state.

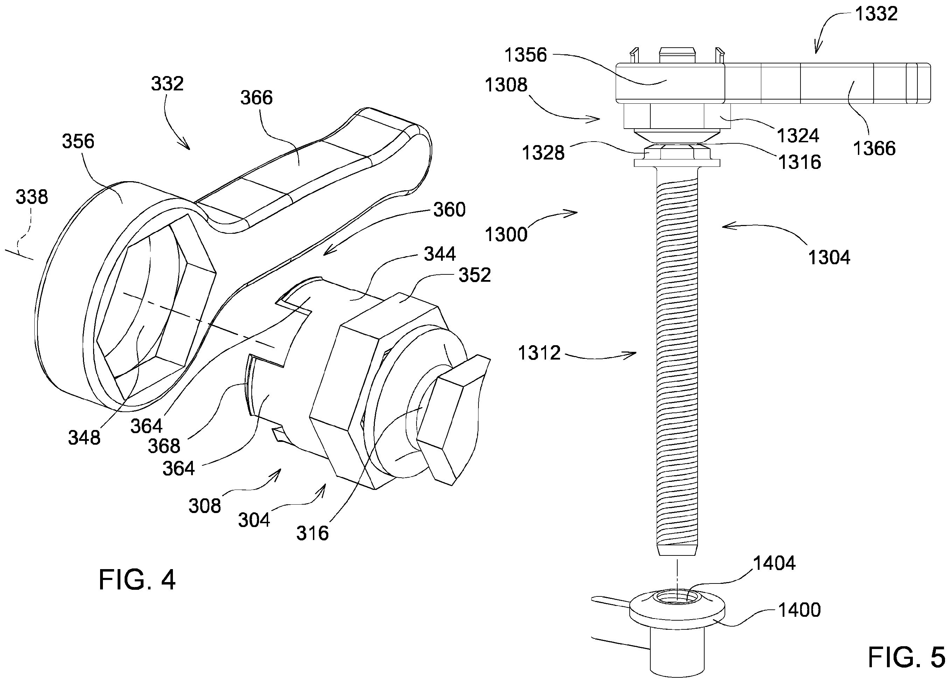

With reference to FIGS. 2-4, the lever arm 332 is inhibited from moving beyond the first state. As shown, the lever arm 332 is stopped from moving beyond the first state because the lever arm 332 includes a shoulder 348 that abuts against a corresponding shoulder 352 of the fastener 304 (abutment shown in FIG. 2 but reference numerals shown in FIG. 3). The shoulder 348 is located within a drive engagement portion 356 of the lever arm 332. On one side of the shoulder 348 is a hexagonal-shaped geometry (FIG. 4) that mates with the hex-shaped geometry of the first drive portion 324 in the first state. On the other side of the shoulder 348 is a cylindrical-shaped geometry (FIG. 4) that mates with the cylindrical sleeve of the bypass portion 344 in the second state. As such, the drive engagement portion 356 is capable of separately and exclusively interfacing with the first drive portion 324 or the bypass portion 344.

The lever arm 332 is also inhibited from moving beyond the second state. As shown, the lever arm 332 is stopped from moving beyond the second state via a retaining portion 360 of the fastener 304. The retaining portion 360 is incorporated with the first segment 308. The retaining portion 360 is a quick-disconnect mechanism that enables the lever arm 332 to be selectively removed from the fastener 304. Although the quick-disconnect mechanism allows the lever arm 332 to be assembled on and removed from the fastener 304, if needed, the mechanism is designed to hold the lever arm 332 on the fastener 304 after assembly. As such, the lever arm 332 can be packaged and sold as part of the fastening assembly 300 so a user does not need to provide his or her own tools. As best illustrated in FIG. 4, the retaining portion 360 includes a series of tabs 364 and a hook 368 at a distal end of each tab 364. The series of tab 364 are cantilevered from the bypass portion 344 and extend along a direction parallel to the longitudinal axis 338. In contrast, the hook 368 extends radially outward from each tab 364 to mechanically interfere with the lever arm 332 and inhibit the lever arm 332 from being removed. However, the tabs 364 can be temporarily deformed (e.g., bent) radially inward in response to the lever arm 332 sliding past the hooks 368, such that the lever arm 332 is capable of being assembled on and removed from the fastener 304. In the illustrated embodiment, there are four tabs 364, while in other embodiments, there may be more or less than four tabs 364. Furthermore, the retaining portion 360 may be other types of quick-disconnect mechanisms, including ball lock style, sleeve and poppet, toggle pin, or other quick release mechanisms.

The lever arm 332 further includes a handle 366 that is coupled to and extends away from the drive engagement portion 356. The handle 366 of the illustrated embodiment extends in a direction perpendicular to the longitudinal axis 338. The handle 366 may be, for example, an injection molded component composed of plastic, glass fiber reinforced propylene, nylon, metal or other suitable material depending on the application. In the illustrated embodiment, the handle 366 is integrally formed as a single piece with the drive engagement portion 356. In other embodiments, the handle 366 may be formed as a separate piece that is coupled to the drive engagement portion 356. The handle 366 of the lever arm 332 allows a user to grasp and manipulate the lever arm 332 relative to the fastener 304. That is, using the handle 366, a user may move the lever arm 332 relative to the fastener 304 along and about the longitudinal axis 338, as explained in further detail below.

During operation, the fastener 304 is threaded onto the bolt 400 by using the lever arm 332 to engage the first segment 308. When the lever arm 332 is in the first state, the drive engagement portion 356 of the lever arm 332 engages the first drive portion 324 of the first segment 308 and rotates the fastener 304 in a first direction (e.g., clockwise) to advance the fastener 304 along the bolt 400 when the handle 366 is rotated about the longitudinal axis 338. Although the lever arm 332 and the fastener 304 are illustrated and described as having hex-shaped profiles to transmit torque from the lever arm 332 to the fastener 304, in other embodiments the lever arm 332 and the fastener 304 may have any suitable non-circular profiles. For example, the lever arm 332 and the fastener 304 may have square profiles, triangular profiles, pentagonal profiles, octagonal profiles, D-shaped profiles, oval profiles, oblong profiles, splined profiles, irregular profiles, and the like. In tight spaces, the handle 366 can only be rotated, for example, 45 degrees or less. In this situation, the lever arm 332 is translated along the longitudinal axis 338, such that the lever arm 332 disengages the hex-shaped first drive portion 324 and aligns with the cylindrical sleeve of the bypass portion 344. Now, the lever arm 332 is in the second state and rotated in a second direction (e.g., counterclockwise) that is opposite the first direction. The fastener 304 is not rotated because no torque is transferred from the lever arm 332 to the fastener 304 when the lever arm 332 is aligned with the bypass portion 344.

This process is repeated, such that the lever arm 332 is moved back to the first state along the longitudinal axis 338 and then rotated about the longitudinal axis 338 in the first direction to advance the fastener 304 along the bolt 400. The lever arm 332, thereby, remains connected to the fastener 304 and can be moved between the states without disconnecting the lever arm 332 from the fastener 304. The torque applied to the first segment 308 is transmitted to the second segment 312 via the shear segment 316, and this causes the second segment 312 to thread onto the bolt 400. The first segment 308 has the clearance hole 340 rather than internal threads and therefore does not engage (e.g., thread onto) the bolt 400. When the torque between the second segment 312 and the bolt 400 reaches the desired level, the further application of torque to the first segment 308 causes the shear segment 316 to break, so that the first segment 308 separates from the second segment 312 and can be removed. The fastening assembly 300 allows a user to apply continuous torque to the fastener 304 without fear of over-torquing the fastener 304 or breaking the toilet bowl 200. In addition, a user knows to continue rotating the fastener until the shear segment 316 breaks, at which point the fastener 304 is sufficiently tightened on the bolt 400. Accordingly, the toilet seat hinges 104 are fastened to the toilet bowl 200 at the predetermined torque of the fastening assembly 300.

If it is later necessary to remove the fastener 304 from the bolt 400, another tool can be used to engage the second segment 312 to unthread the fastener 304 from the bolt 400. Alternatively, the lever arm 332 may be removed from the first segment 308 via the retaining portion 360 and engaged with the second segment 312 to unthread the fastener 304 from the bolt 400, assuming the size and geometry of the first and second segments 308, 312 are the same.

FIGS. 5-8 illustrate a fastening assembly 1300 according to another embodiment. The fastening assembly 1300 is similar to the fastening assembly 300; therefore, similar components are designated with similar references numbers plus "1000." At least some differences and/or at least some similarities between the fastening assemblies 300, 1300 will be discussed in detail below. In addition, components or features described with respect to only one or some of the embodiments described herein are equally applicable to any other embodiments described herein.

With reference to FIG. 5, the fastening assembly 1300 is a shear bolt fastener 1304, meaning a portion of the bolt breaks when the desired torque is reached. The fastening assembly 1300 is threaded onto interior threads 1408 of a nut 1400 to secure the hinge base 116 to the toilet bowl 200. The fastener 1304 includes a first segment 1308, a second segment 1312, a shear segment 1316 connecting the segments 1308, 1312. As such, the fastener 1304 may also be referred to as a shear bolt.

With continued reference to FIG. 5, the first segment 1308 includes a first drive portion 1324 and the second segment 1312 includes a second drive portion 1328. The first drive portion 1324 is driven by a lever arm 1332, or tool, when assembling the fastener 1304 onto the nut 1400 until the first drive portion 1324 breaks away (i.e., separates) from the second segment 1312. At this point, another tool may be used to engage the second drive portion 1328 when disassembling the fastener 1304 from the nut 1400. In the illustrated embodiment, both the first drive portion 1324 and the second drive portion 1328 are hex-shaped ½" bolt heads. In other embodiments, shown in FIG. 10, the first and second drive portions 1324, 1328 may alternatively be different sizes or different geometries, such as castellations, splines, teeth, or other various mating geometries. In some embodiments, the first and second drive portions 1324, 1328 may have different sizes and/or geometries to each other.

With reference to FIGS. 5-7, the second segment 1312 includes a threaded portion 1336 which is formed helically around a longitudinal axis 1338 to allow the fastener 1304 to screw onto the corresponding interior threads 1408 of the nut 1400. To ensure that the shear segment 316 breaks instead of either of the segments 1308 or 1312, the shear segment 1316 has a lower torque resistance than either of the segments 1308 or 1312. This means that as an increasing torque is applied to the segment 1308 and is transmitted to the segments 1312 and 1316, the shear segment 1316 will break before either of the segments 1308 or 1312. The lower torque resistance can be provided in many ways, such as, for example and as shown in the drawings, by giving the shear segment 1316 a lesser cross-sectional area than either of the segments 1308, 1312.

The fastener 1304 may be, for example, an injection molded component composed of plastic, glass fiber reinforced propylene, nylon, metal or other suitable material depending on the application. In some high-strength, high-torque application, for example, the fastener 1304 may be composed of metal that still fractures at the shear segment 1316. In lower-strength, lower-torque applications, the fastener 1304 being composed of a plastic material is sufficient. Still, in other embodiment, the fastener 1304 may be composed of more than one material (e.g., bi-metal), where the first and second segments 1308, 1312 are composed of a high strength metal (e.g., stainless steel) and the shear segment 1316 is composed of a lower strength metal (e.g., carbon steel) to further concentrate the fracturing at the shear segment 1316.

The fastener 1304 further includes a bypass portion 1344 that is incorporated with the first segment 1308. In some embodiments, the bypass portion 1344 is integrally formed (e.g., molded, machined, etc.) as a single piece with a remainder of the fastener 1304. In other embodiments, the bypass portion 1344 may be formed as a separate piece that is secured to the remainder of the fastener 1304. The bypass portion 1344 is adjacent the first drive portion 1324 and axially aligned along the longitudinal axis 1338. Specifically, the bypass portion 1344 extends away from the first drive portion 1324 in a direction along the longitudinal axis 1338. In the illustrated embodiment, the bypass portion 1344 is a cylindrical sleeve that interfaces with the lever arm 1332 and allows the lever arm 1332 to rotate around the fastener 1304 without rotating the fastener 1304. That is, when the lever arm 1332 is only interfaced with the bypass portion 1344, the lever arm 1332 may rotate relative to the fastener 1304. That said, the lever arm 1332 may move between a first state, in which the lever arm 1332 is interfaced (i.e., engaged) with the first drive portion 1324, and a second state, in which the lever arm 1332 is interfaced (i.e., engaged) with the bypass portion 1344. As a result, the lever arm 1332 is configured to rotate the fastener 1304 in the first state, whereas the lever arm 1332 is configured to rotate relative to the fastener 1304 in the second state. Said another way, the lever arm 1332 and the fastener 1304 co-rotate together in the first state. The lever arm 1332 moves along the longitudinal axis 1338 between the first state and the second state.

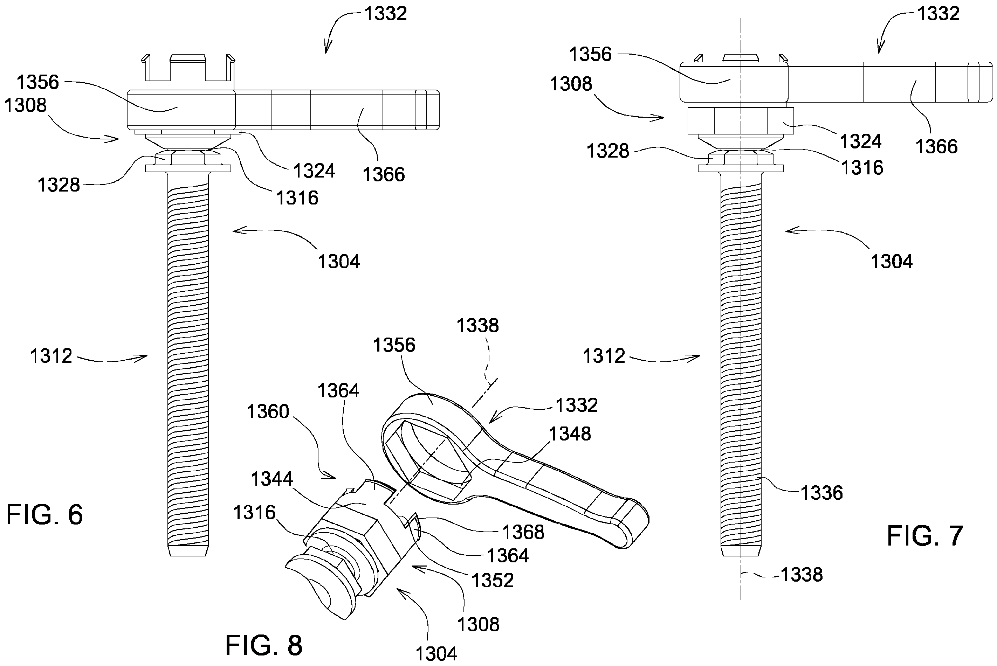

The lever arm 1332 is inhibited from moving beyond the first state. As shown, the lever arm 1332 is stopped from moving beyond the first state because the lever arm 1332 includes a shoulder 1348 that abuts against a corresponding shoulder 1352 of the fastener 1304 (FIG. 8). The shoulder 1348 is located within a drive engagement portion 1356 of the lever arm 1332. On one side of the shoulder 1348 is a hexagonal-shaped geometry that mates with the hex-shaped geometry of the first drive portion 1324 in the first state. On the other side of the shoulder 1348 is a cylindrical-shaped geometry that mates with the cylindrical sleeve of the bypass portion 1344 in the second state. As such, the drive engagement portion 1356 is capable of separately and exclusively interfacing with the first drive portion 1324 or the bypass portion 1344.

The lever arm 1332 is also inhibited from moving beyond the second state. As shown, the lever arm 1332 is stopped from moving beyond the second state via a retaining portion 1360 of the fastener 1204. The retaining portion 1360 is specifically incorporated with the first segment 1308. The retaining portion 1360 is a quick-disconnect mechanism that enables the lever arm 1332 to be selectively removed from the fastener 1304. The retaining portion 1360 includes a series of tabs 1364 and a hook 1368 at a distal end of each tab 1364. The series of tab 1364 are cantilevered from the bypass portion 1344 and extend along a direction parallel to the longitudinal axis 1338. In contrast, the hook 1368 extends radially outward from each tab 1364 to mechanically interfere with the lever arm 1332 and inhibit the lever arm 1332 from being removed. However, the tabs 1364 can be temporarily deformed (e.g., bent) radially inward in response to the lever arm 1332 sliding past the hooks 1368, such that the lever arm 1332 is capable of being removed from the fastener 1304 (FIG. 8). In the illustrated embodiment, there are four tabs 1364, while in other embodiments, there may be more or less than four tabs 1364. Furthermore, the retaining portion 1360 may be other types of quick-disconnect mechanisms, including ball lock style, sleeve and poppet, toggle pin, or other quick release mechanisms.

The lever arm 1332 further includes a handle 1366 that is coupled to and extends away from the drive engagement portion 1356. The handle 1366 of the illustrated embodiment extends in a direction perpendicular to the longitudinal axis 1338. The handle 1366 may be, for example, an injection molded component composed of plastic, glass fiber reinforced propylene, nylon, metal or other suitable material depending on the application. In the illustrated embodiment, the handle 1366 is integrally formed as a single piece with the drive engagement portion 1356. In other embodiments, the handle 1366 may be formed as a separate piece that is coupled to the drive engagement portion 1356. The handle 1366 of the lever arm 1332 allows a user to grasp and manipulate the lever arm 1332 relative to the fastener 1304. That is, using the handle 1366, a user may move the lever arm 1332 relative to the fastener 1304 along and about the longitudinal axis 1338, as explained in further detail below.

During operation, the fastener 1304 is threaded to the nut 1400 by using the lever arm 1332 to engage the first segment 1308. When the lever arm 1332 is in the first state, the drive engagement portion 1356 of the lever arm 1332 engages the first drive portion 1324 of the first segment 1308 and rotates the fastener 1304 in a first direction (e.g., clockwise) to advance the fastener 1304 along the nut 1400 when the handle 1366 is rotated about the longitudinal axis 1338. Although the lever arm 1332 and the fastener 1304 are illustrated and described as having hex-shaped profiles to transmit torque from the lever arm 1332 to the fastener 1304, in other embodiments the lever arm 1332 and the fastener 1304 may have any suitable non-circular profiles. For example, the lever arm 1332 and the fastener 1304 may have square profiles, triangular profiles, pentagonal profiles, octagonal profiles, D-shaped profiles, oval profiles, oblong profiles, splined profiles, irregular profiles, and the like. In tight spaces, the handle 1366 can only be rotated, for example, 45 degrees or less. In this situation, the lever arm 1332 is translated along the longitudinal axis 1338, such that the lever arm 1332 disengages the hex-shaped first drive portion 1324 and aligns with the cylindrical sleeve of the bypass portion 1344. Now, the lever arm 1332 is in the second state and rotated in a second direction (e.g., counterclockwise) that is opposite the first direction. The fastener 1304 is not rotated because no torque is transferred from the lever arm 1332 to the fastener 1304 when the lever arm 1332 is aligned with the bypass portion 1344.

This process is repeated, such that the lever arm 1332 is moved back to the first state along the longitudinal axis 1338 and then rotated about the longitudinal axis 1338 in the first direction to advance the fastener 1304 along the nut 1400. When the torque between the second segment 1312 and the nut 1400 reaches the desired level, the further application of torque to the first segment 1308 causes the shear segment 1316 to break, so that the first segment 1308 separates from the second segment 1312 and can be removed.

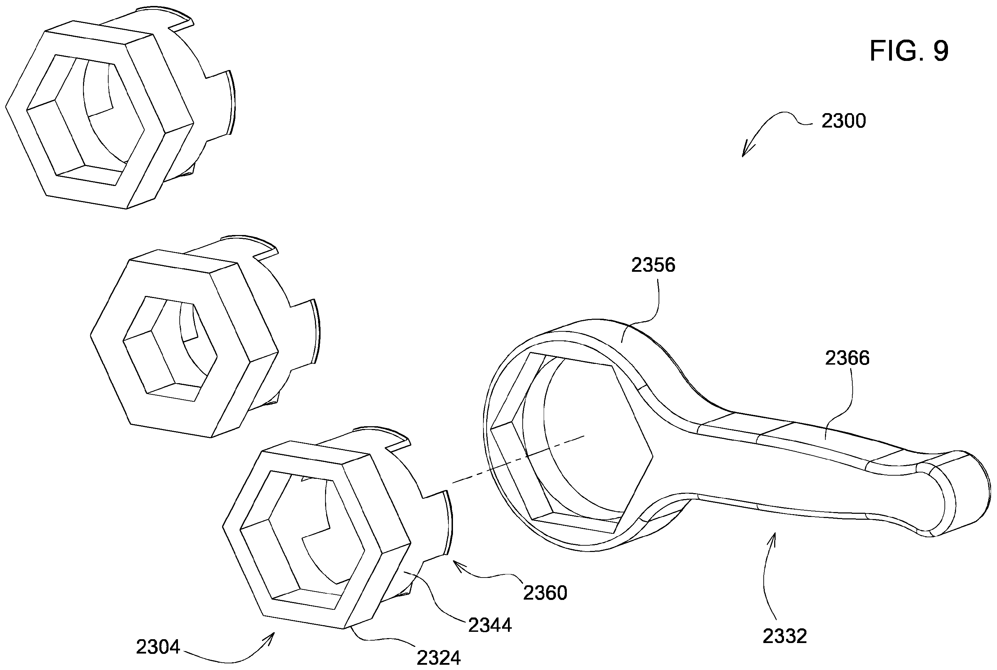

FIG. 9 illustrates a fastening assembly 2300 according to another embodiment. The fastening assembly 2300 is similar to the fastening assembly 300; therefore, similar components are designated with similar references numbers plus "2000." At least some differences and/or at least some similarities between the fastening assemblies 300, 2300 will be discussed in detail below. In addition, components or features described with respect to only one or some of the embodiments described herein are equally applicable to any other embodiments described herein.

With reference to FIG. 9, the fastening assembly 2300 is an adapter that is coupled to, for example, a nut or a bolt head to drive the nut or the bolt to secure an object. The fastening assembly 2300 includes a drive portion 2324 and a bypass portion 2344, such that the entire fastener 2304 is similar to only the first segment 308 of the fastener 304 without the second segment 312 and shear segment 316. The fastening assembly 2300 further includes a lever arm 2332, or tool.

The drive portion 2324 may be formed in various sizes (e.g., 3/8", ½", ¾", etc.) to adapt to different size nut fasteners 304 or different size bolt fasteners 1304. In the illustrated embodiment, the drive portion 2324 does not include a threaded portion. However, in other embodiment, the fastener 2304 may have a threaded portion to thread directly onto a bolt (e.g., bolt 400).

During operation, the drive portion 2324 is coupled to a nut or a bolt head, creating a snug fit therebetween. At this point, the lever arm 2332 may be placed in the first state, such that the drive engagement portion 2356 of the lever arm 2332 is engaged with the drive portion 2324 to rotate the drive portion 2324, and therefore, a nut or bolt connected to the drive portion 2324. The lever arm 2332 may then be moved to the second state, such that the drive engagement portion 2356 of the lever arm 2332 is interfaced with the bypass portion 2344 and the lever arm 2332 may rotate relative to the fastener 2304. The process is repeated until the fastener 2304 has achieved the desired level of torque. Then, the fastening assembly 2300 may be removed from the nut or the bolt.

If the fastener 2304 has a threaded portion and is directly fastened to a bolt, the lever arm 2332 may be removed from the fastener 2304 via the retaining portion 2360.

Although the disclosure has been described in detail with reference to certain preferred embodiments, variations and modifications exist within the scope and spirit of one or more independent aspects of the disclosure as described. Various features and advantages of the disclosure are set forth in the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

The following clauses provide optional features of the invention hat may be provided in conjunction with any other features disclosed herein in any combination.
1. A fastening assembly configured to couple a toilet seat hinge to a toilet bowl by a threaded object, the fastening assembly comprising: a fastener including a first segment having a drive portion and a bypass portion extending from the drive portion, a second segment having a threaded portion defined around a longitudinal axis, and a shear segment disposed between the first segment and the second segment; and a lever arm that is coupled to the first segment and is moveable along the longitudinal axis between a first state, in which the lever arm is interfaced with the drive portion, and a second state, in which the lever arm is interfaced with the bypass portion, wherein the lever arm is operable to rotate the fastener relative to the threaded object in the first state and operable to rotate relative to the fastener in the second state.
2. The fastening assembly of clause 1, wherein the shear segment fractures at a predetermined torque applied to the first segment relative to the second segment, such that the first segment separates from the second segment.
3. The fastening assembly of clause 2, wherein the lever arm remains with the first segment when the first segment fractures from the second segment.
4. The fastening assembly of clause 3, wherein the drive portion is a first drive portion and the second segment includes a second drive portion, such that the lever arm or another tool is capable of engaging the second drive portion to rotate the second segment relative to the threaded object.
5. The fastening assembly of any one of clauses 1 to 4, wherein the first segment further includes a retaining portion to hold the lever arm on the first segment.
6. The fastening assembly of clause 5, wherein the retaining portion includes a tab with a hook, wherein the tab is cantilevered from the bypass portion along a direction parallel to the longitudinal axis, and wherein the hook extends radially outward from the tab to mechanically interfere with the lever arm and inhibit the lever arm from being removed.
7. The fastening assembly of clause 6, wherein the tab bends radially inward in response to the lever arm sliding past the hook.
8. The fastening assembly of any one of clauses 1 to 7, wherein the drive portion is a nut and the bypass portion is a cylindrical sleeve that extends from the nut in a direction along the longitudinal axis.
9. The fastening assembly of clause 8, wherein the lever arm includes a drive engagement portion configured to interface with the first segment and a handle extending from the drive engagement portion configured to be grasped by a user.
10. The fastening assembly of clause 9, wherein the drive engagement portion of the lever arm includes a hexagonal-shaped geometry to mate with the nut in the first state and a cylindrical geometry to mate with the cylindrical sleeve in the second state.
11. The fastening assembly of any one of clauses 1 to 10, wherein the first segment is without threads.

## Claims

1. A fastening assembly (300) comprising:
a fastener (304) including a threaded portion (336) defined around a longitudinal axis (338), a drive portion (324), and a bypass portion (344); and
a lever arm (332) that is moveable along the longitudinal axis (338) between a first state, in which the lever arm (332) is interfaced with the drive portion (324), and a second state, in which the lever arm (332) is interfaced with the bypass portion (324),
wherein the lever arm (332) is operable to rotate the fastener (304) in the first state and operable to rotate relative to the fastener (304) in the second state.

2. The fastening assembly of claim 1, wherein the drive portion and the bypass portion are disposed along the longitudinal axis adjacent to each other.

3. The fastening assembly of claim 1 or claim 2, wherein the drive portion is disposed radially outward relative to the threaded portion.

4. The fastening assembly of any preceding claim, wherein the fastener further includes a retaining portion to selectively hold the lever arm on the fastener.

5. The fastening assembly of claim 4, wherein the retaining portion includes a tab with a hook, wherein the tab is cantilevered from the bypass portion along a direction parallel to the longitudinal axis, and wherein the hook extends radially outward from the tab to mechanically interfere with the lever arm and inhibit the lever arm from being removed.

6. The fastening assembly of claim 5, wherein the tab bends radially inward in response to the lever arm sliding past the hook.

7. The fastening assembly of any preceding claim, wherein the drive portion is a nut and the bypass portion is a cylindrical sleeve that extends from the nut in a direction along the longitudinal axis.

8. The fastening assembly of claim 7, wherein the lever arm includes a drive engagement portion configured to interface with the fastener and a handle extending from the drive engagement portion configured to be grasped by a user.

9. The fastening assembly of claim 8, wherein the drive engagement portion of the lever arm includes a hexagonal-shaped geometry to mate with the nut in the first state and a cylindrical geometry to mate with the cylindrical sleeve in the second state.
